# EUROPEAN PATENT SPECIFICATION

(11) **EP 1 525 409 B1**
(45) Date of publication and mention of the grant of the patent: **14.12.2005**
(21) Application number: 02770168.9
(22) Date of filing: 30.07.2002
(51) Int. Cl.: F16D 65/097, F16D 55/226

(54) **STOPPER FOR A CALIPER OF A DISK BRAKE**
STOPPER FÜR SCHWIMSATTEL EINER BREMSSCHEIBE
BUTOIR POUR UN ETRIER D'UN FREIN A DISQUE

(43) Date of publication of application: 27.04.2005
(73) Proprietor: Freni Brembo S.p.A., 24035 Curno (Bergamo) (IT)
(72) Inventor: GHERARDI, Pierangelo, I-24019 Zogno (Bergamo) (IT); REGAZZONI, Mattia, I-24010 Ponteranica (Bergamo) (IT); VEZZOLI, Giancarlo, I-25032 Chiari (Bergamo) (IT)
(74) Representative: Vittorangeli, Lucia
(86) International application number: PCT/IT2002/000506
(87) International publication number: WO 2004/011820

(56) References cited:
- US-A- 4 124 105
- PATENT ABSTRACTS OF JAPAN vol. 1996, no. 10, 31 October 1996 (1996-10-31) & JP 08 159185 A (SUMITOMO ELECTRIC IND LTD), 18 June 1996 (1996-06-18)
- PATENT ABSTRACTS OF JAPAN vol. 002, no. 080 (M-025), 24 June 1978 (1978-06-24) & JP 53 048175 A (AKEBONO BRAKE IND CO LTD), 1 May 1978 (1978-05-01)
- PATENT ABSTRACTS OF JAPAN vol. 2000, no. 09, 13 October 2000 (2000-10-13) & JP 2000 179596 A (HITACHI CHEM CO LTD), 27 June 2000 (2000-06-27)

## Description

The present invention relates to protective lattens for reaction shoulders of pads in disk brake calipers, disk brake calipers suitable for receiving such lattens, and in general braking systems with disk brakes which use protective lattens for reaction shoulders of the pads.

In disk brake calipers it is known to provide the reaction shoulders of the pads with protective lattens.

Such a need arises from the fact that the reaction shoulders of the calipers inevitably tend to become damaged on contact with the lateral edge of the plates of the pads, each time in the braking phase the pads are pushed by the friction with the brake disk against the reaction shoulders.

This damage is increased if the calipers are produced from light and relatively ductile materials, such as, for example, aluminium alloys.

In the prior art there are numerous embodiments of lattens which do not however guarantee secure fixing free of vibration, and do not provide adequate bearing of the latten on the reaction shoulders.

Two exemplary embodiments of known lattens are described in patents JP2000120735 and JP8159185. JP 08 159 185 shows a latten according to the preamble of claim 1.

The problem underlying the present invention is that of making available a protective latten for the reaction shoulders of the pads in disk brake calipers which remedies the drawbacks mentioned with reference to the prior art.

Such drawbacks and limitations are remedied in an effective manner by a latten according to claim 1, by a caliper according to claims 27 to 31, and by a disk brake according to claim 32 or 33.

Other embodiments of the latten according to the invention are described in the following claims.

Further characteristics and advantages of the invention in question will become clearer from the following description of some of its preferred nonlimiting exemplary embodiments, wherein:

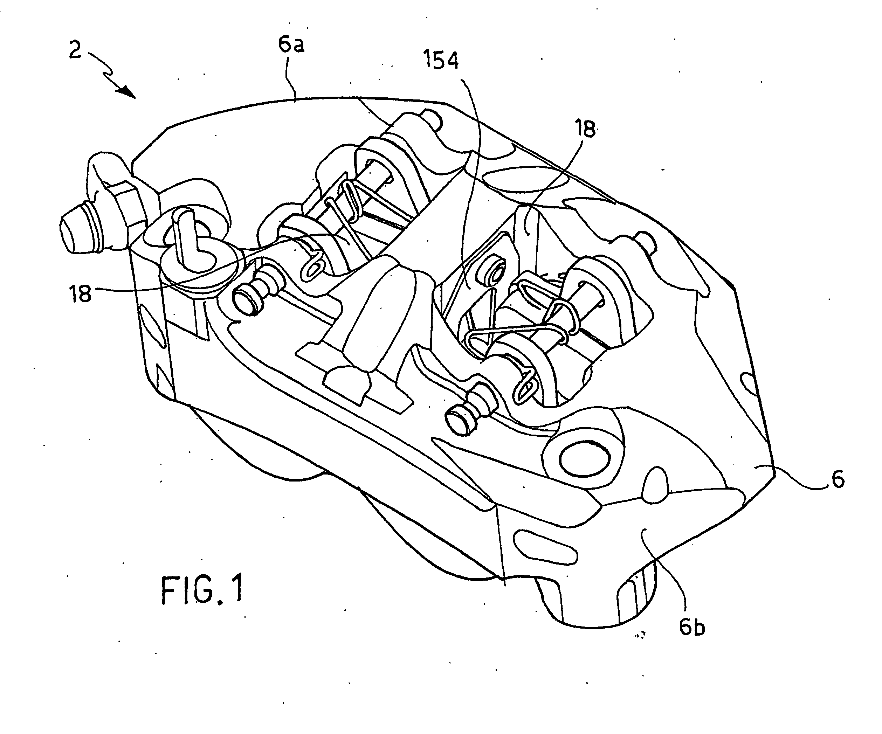

Figure 1 shows a perspective view of a disk brake caliper with pads and reaction lattens according to one embodiment of the invention;
Figure 2 shows an exploded perspective view of a half-caliper for disk brake with pads and lattens according to one embodiment of the invention;
Figure 3 shows an overall perspective view of the half-caliper for disk brake with pads and lattens of Figure 2;
Figures 4A to 4D respectively show a perspective view and 3 orthogonal projections of the latten of Figures 2 and 3;
Figure 5 shows an exploded perspective view of a half-caliper for disk brake with pads and lattens according to a further embodiment of the invention;
Figure 6 shows an overall perspective view of the half-caliper for disk brake with pads and lattens of Figure 5;
Figures 7A to 7D respectively show a perspective view and 3 orthogonal projections of the latten of Figures 5 and 6;
Figure 8 shows an exploded perspective view of a half-caliper for disk brake with pads and lattens according to a further embodiment of the invention;
Figure 9 shows an overall perspective view of the half-caliper for disk brake with pads and lattens of Figure 8;
Figures 10A to 10D respectively show a perspective view and 3 orthogonal projections of a latten of Figures 8 and 9;
Figures 11A to 11C respectively show a perspective view and 2 orthogonal projections of a further latten of Figures 8 and 9;
Figure 12 shows an exploded perspective view of a half-caliper for disk brake with pads and lattens according to a further embodiment of the invention;
Figure 13 shows an overall perspective view of the half-caliper for disk brake with pads and lattens of Figure 12;
Figure 14 shows a further overall perspective view of the half-caliper for disk brake with pads and lattens of Figure 12;
Figures 15A to 15D respectively show a perspective view and 3 orthogonal projections of the latten of Figures 12, 13 and 14.

It should be pointed out that the term "half-caliper for disk brake" is intended to mean one of the two halves of a caliper straddling a brake disk, complete with components, such as, for example, pads and pistons.

Moreover, the term "caliper half-body" is intended to mean one of the two halves of a caliper straddling a brake disk, devoid of said components.

In particular, the definitions of half-caliper and half-body are valid both in the case of monobloc calipers, that is to say, constructed in one piece, and in the case of calipers made up of more than one part, or two half-calipers comprising two caliper half-bodies connected to each other for example by means of threaded connections.

In the drawings mentioned, each caliper half-body has been shown sectionised, without thereby wishing to limit the exemplary embodiments only to the type of construction of the one-piece calipers.

The members or parts of members in common between the embodiments described hereinafter will be indicated by the same numerical references.

With reference to the aforesaid drawings, the reference 2 indicates generally a caliper assembly for disk brake, intended for braking a vehicle wheel not shown and known per se.

A caliper body 6 is connected to a support, intended to be rigidly fixed to a part of the suspension of a wheel. Said caliper body 6 straddles a braking disk, not shown, limitedly at a peripheral portion or braking band. The disk is likewise fixed by known means to the aforesaid wheel.

The caliper body 6 comprises, in one piece or rigidly connected to one another, two half-bodies 6A and 6B positioned on opposite sides of the braking band of the disk.

At least one pair of single acting pistons 10 is slidably guided within hydraulic braking cylinders disposed facing one another and formed in one piece within said half-bodies 6A, 6B.

Each caliper half-body 6A and 6B of said caliper body 6 comprises a base surface 14 facing towards the brake disk and which extends substantially parallel thereto, and a housing space 18 which extends predominantly in a direction tangential to the brake disk, and is intended to house pads for disk brakes.

On two opposed sides 22 said housing space 18 is bounded by a pair of reaction shoulders 26.

The caliper assembly 2 further comprises at least one pair of pads 30 which, according to one embodiment, are completely identical and opposed, mounted on opposite sides of the brake disk in each housing space 18 of the caliper body 6, facing the pistons 10. According to one embodiment, each pad 30 comprises a support plate 34 for supporting a friction lining 38.

In particular, the friction linings 38 are fixed on respective faces or support surfaces 42 of the support plates 34. The plates 22 are mounted in the housing space 18 of the caliper body 6 with the corresponding friction linings 38 facing towards the disk, so that opposed faces or thrust surfaces 46 of the support plates 34 are facing towards the pistons 10.

Each plate 34 is provided, laterally' and on opposite sides, with lateral edges 50 constituting stop means for the plate itself and intended, during the braking phase, to abut against said reaction shoulders 26.

It should be pointed out that it is possible to use pads made in one piece, or consisting of a single body, without separation between support plate 34 and friction lining 38. In this case, the lateral edges 50 provide stop means for the one-piece pad.

Advantageously, a latten 54 comprising an abutment body 58 and systems for fixing said latten, is suitable for co-operating with said lateral edges 50 of the plates and is suitable for being connected to said reaction shoulders 26 of the caliper body by means of said fixing systems.

In particular, the abutment body 58 comprises, respectively on two opposed and essentially parallel sides, an abutment surface 66 intended to receive in abutment the lateral edges 50 of the support plates 34, and a bearing surface 70, intended to abut against said reaction shoulders 26 of the caliper body.

Said fixing systems advantageously comprise at least one portion of said latten suitable for providing a form-fit coupling 74 with a corresponding portion of the caliper body or half-body, in particular said reaction shoulders 26, and at least one coupling for threaded connection 78, the at least one form-fit coupling 74 and the at least one coupling for threaded connection 78 being advantageously disposed on anchorage ends 100 of said latten, spaced from each other.

By "spaced", it is meant that the portions suitable for providing the form-fit coupling and the coupling for threaded connection do not perform their coupling functions at the same point or in the same area, but in areas separated from each other or, precisely, spaced, so as to increase the anchorage or fixing free of vibration of the latten to the caliper body. In other words, the arrangement of the two portions for coupling the latten to the caliper body is selected on the basis of the geometric shape of the reaction shoulders in such a way as to avoid the occurrence of vibration phenomena during the operation, of the caliper.

For example, the at least one form-fit coupling 74 and the at least one coupling for threaded connection 78 are advantageously disposed on anchorage ends 100 of said latten, opposed to one another with respect to a prevailing direction of said latten.

In particular, by form-fit coupling connections there are meant couplings between surfaces of bodies having complementary shapes such as to produce a kind of hooking, for example simply by resting said surfaces against each other or bringing them close together, or producing a force fit or interlocking coupling.

In fact, within the scope of the present invention, by form-fit couplings there are also meant forced connections between bodies, such as forced couplings between a body inserted by force or planted in its housing, such as, for example hole/arbor couplings with interference.

On the other hand, by threaded connections there are meant all those connections of removable type, which are characterised by the presence of at least one threaded body or screw which engages with a nut, or captive screws, self-biting screws or screw systems with lock-nuts, bolts, washers and the like.

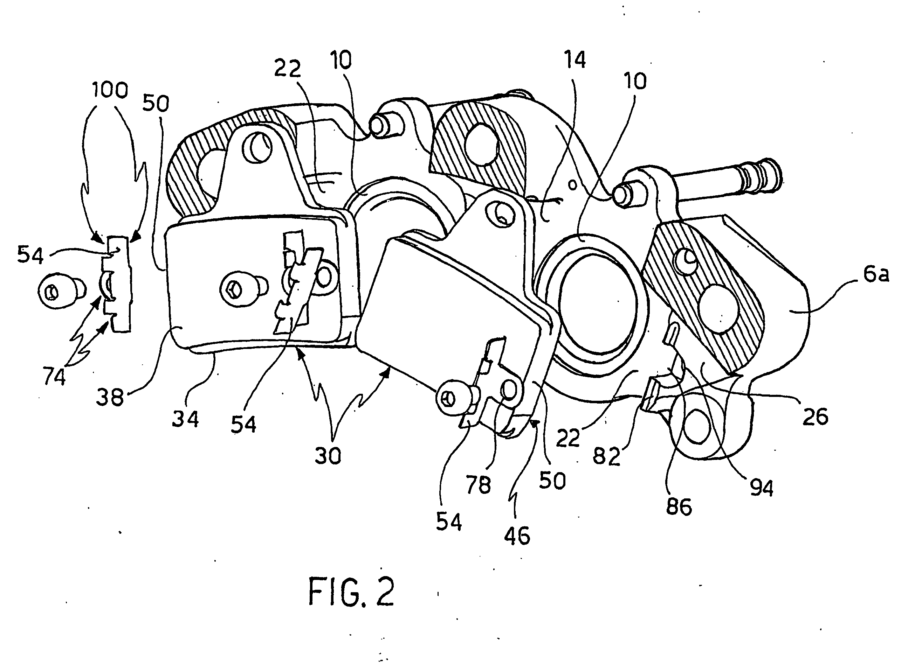

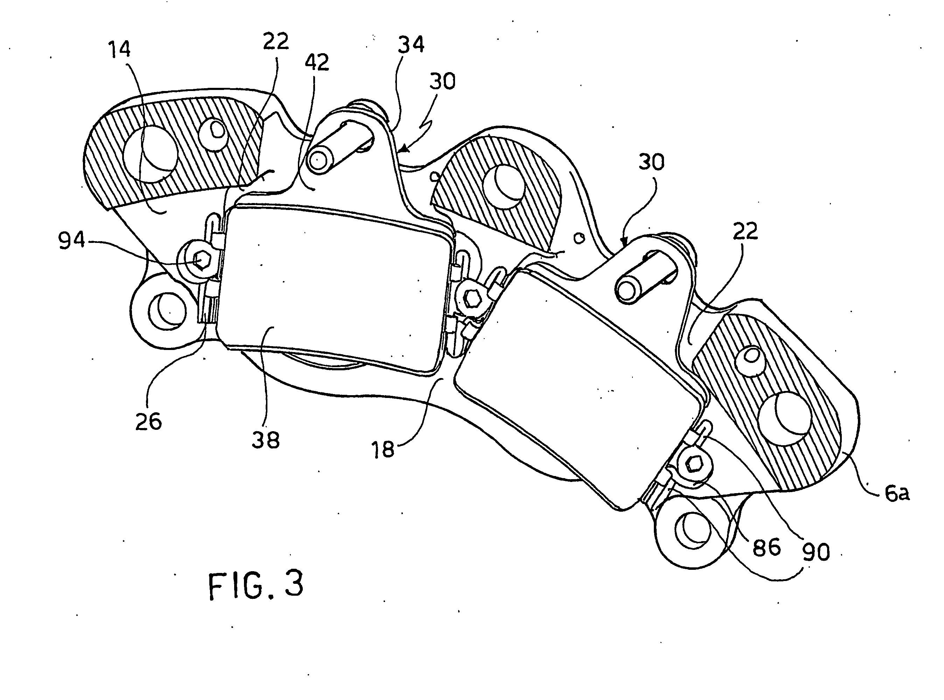

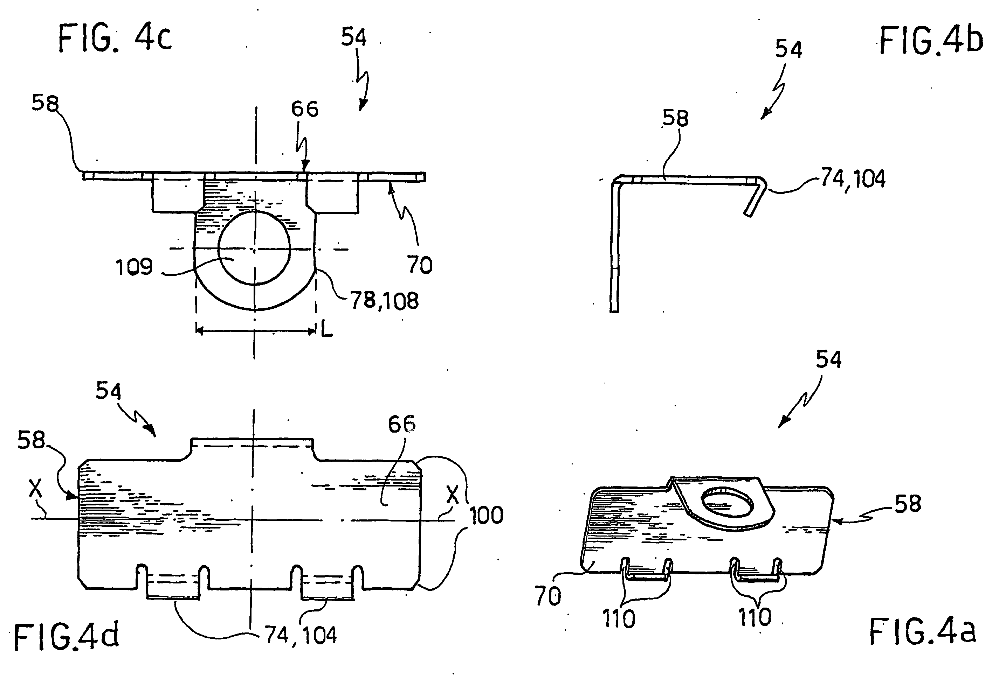

With particular reference to Figures 2, 3 and 4, in one embodiment, each reaction shoulder 26 of the relative caliper half-body 6A, 6B projects, at the two opposed sides 22 of said caliper half-body, towards the brake disk, or in a direction perpendicular to said base surface 14, and in a direction predominantly perpendicular to the thrust forces exchanged between the reaction shoulder 26 and the lateral, or radial, edge 50.

Each reaction shoulder 26 has at an internal portion 82, which faces towards the brake disk, an advantageously arcuate, wedge-shaped or sawtooth-shaped profile.

According to one possible embodiment, each reaction shoulder 26, which projects from the base surface 14 towards the brake disk, is interrupted by a cavity 86 having a U-shaped section of predetermined depth or length, which divides it into two portions 90 located on opposite sides with respect to said cavity 86.

Advantageously, at said cavity 86, on the base surface 14, there is an anchorage hole 94 which extends in a direction perpendicular to said base surface 14.

Also in the embodiments described hereinafter, the anchorage holes produced on the caliper body or half-body, suitable for fixing said reaction lattens on the caliper body or half-body, will be indicated by the numerical reference 94.

Said anchorage hole 94 may be blind or, according to a different embodiment, pass through the entire caliper half-body, emerging on the side of an outer lateral surface of the caliper half-body, or opposed to said base surface 14 and facing on the side opposed to the brake disk.

The latten 54 advantageously is of such a shape and dimensions as to allow it to be mounted on said two portions 90 of the reaction shoulders 26.

According to one embodiment, the abutment body 58 of said latten 54 extends substantially in a prevailing direction X-X and comprises, along anchorage ends 100 which are opposed or in any case spaced with respect to said prevailing direction X-X, systems for fixing to said reaction shoulders.

In particular, along one of the anchorage ends 100, it has a portion suitable for producing a form-fit coupling 74, for example tabs 104, having a profile complementary to the profile of said inner portion 82 of each of the two portions 90 of the reaction shoulder.

At the opposite end 100, said latten 54 comprises at least one coupling for threaded connection 78, for example a terminal piece 108 provided with a clamping hole 109.

It may be noted that said terminal piece 108 further provides a form-fit coupling with the cavity 86, and in particular with the base surface 14 of the caliper half-body at the cavity 86.

In the embodiments described hereinafter, the clamping holes provided on the latten, suitable for clamping the reaction lattens on the caliper body or half-body, will be indicated by the numerical reference 109.

Advantageously, said terminal piece 108 extends substantially in a direction perpendicular to the abutment body 58 of the latten 54. To further advantage, said terminal piece has a width "L" less than or equal to the cavity 86 comprised between the portions 90 of the reaction shoulders 26, so as to be able to be inserted into said cavity 86.

It may be noted that, advantageously, said terminal piece 108 extends, with respect to the abutment body 58, on the same side as the tabs 104, or on the side of the bearing surface 70 of the latten 54, so that said tabs 104 and said terminal piece 108 are bent on the same side of said abutment body 58.

Moreover, said tabs 104 conveniently have, in the region of connection to the abutment body 58 of the latten 54, fillets or undercuts 110 which on the one hand reduce the notching effects in the region of connection of the tabs to the abutment body, and on the other hand confer flexibility on the tabs themselves, thus guaranteeing the possibility of varying the clamping position of the latten on the reaction shoulders and of thus being able to preload the latten itself.

According to one possible embodiment, the axis of said clamping hole 109 is advantageously positioned such that, after having hooked the tabs 104, on the reaction shoulders 26, centring the terminal piece 108 in the cavity 86, the clamping hole 109 is aligned with said anchorage hole 94 of the base surface 14.

In this way it is possible to constrain together the caliper half-body and the latten by means of a coupling for threaded connection 78 passing through the respective anchorage holes 94 and clamping holes 109.

In the case where the anchorage hole 94 on the caliper body or half-body is blind, said anchorage hole 94 of the caliper body or half-body will be threaded to allow the screwing in of the threaded connections 78, introduced from the inside of the housing space 18.

In the case where the anchorage hole 94 on the caliper body or half-body is a through hole, it is possible to insert the threaded connections either from the inside of the housing space 18 or from a lateral surface of the caliper half-body opposed to said base surface 14.

In the first case it is possible to provide, for example, a nut which locks the threaded connection, said nut being positioned on the side of a lateral surface opposed to said base surface 14.

It is likewise possible to create, on said lateral surface of the caliper body opposed to the base surface 14, a cylindrical seat, not shown, for the insertion of said nut.

This seat also allows the use of washers or split pins as means preventing unscrewing, and may further be covered by a plug, for example with pressure.

In the second case the threaded means may be introduced from the lateral surface opposed to the base surface 14, constraining the threaded end which emerges from the housing space 18 for example directly on the clamping hole 109 of the latten, providing for threading the clamping hole 109 of the latten or mounting a nut coaxially therewith.

It may be noted that the latten described cooperates in abutment with the lateral edge of a single pad for disk brakes, or is not mounted straddling the brake disk.

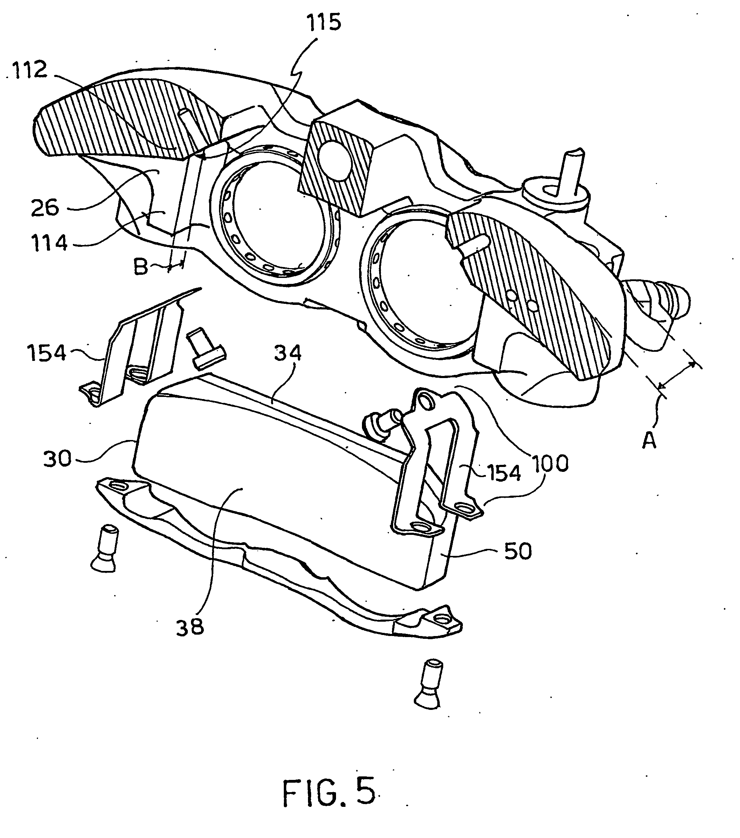

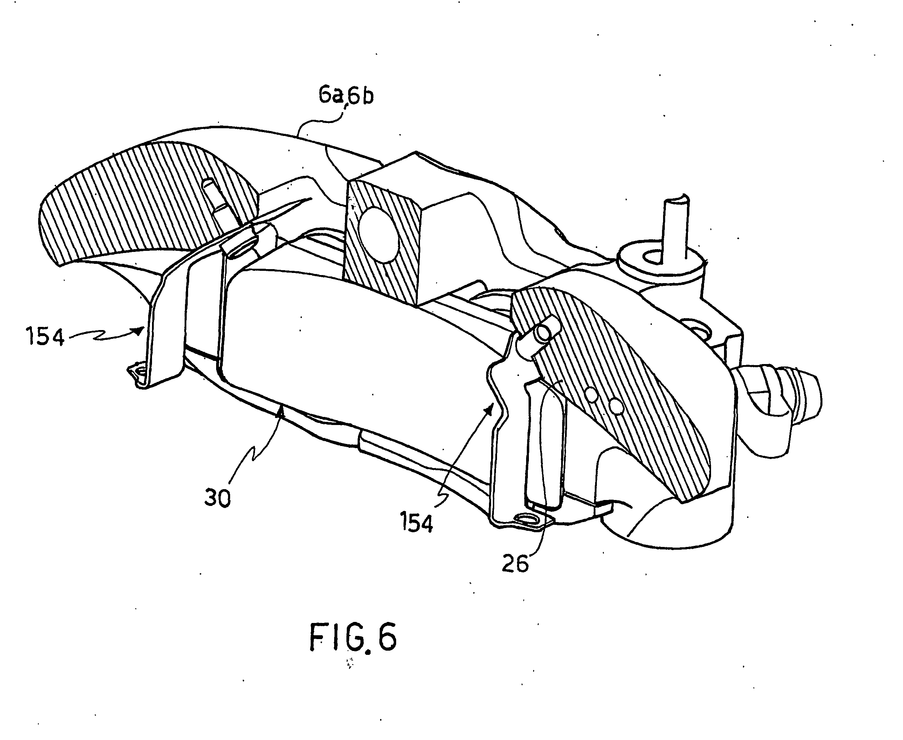

In a further embodiment, illustrated in Figures 5, 6 and 7, at an upper part 112, the reaction shoulders 26 of each caliper half-body project for a length "A", at two opposed sides 22 of said caliper half-body, from the base surface 14 towards the brake disk, or in a direction perpendicular to said base surface 14.

In this way, at said upper part 112, the reaction shoulders project, cantilevered, towards the brake disk.

At a lower part 114, directed radially towards the periphery of the brake disk, the reaction shoulders 26 project, from the base surface towards the brake disk, for a length "B" less than said length "A".

It should be specified that by the term upper part there is meant a portion of the caliper body or half-body directed radially towards the outside of the caliper, or in a direction away from the brake disk, while by the term lower part there is meant a portion of the caliper body or half-body directed radially towards the inside of the caliper, or in a direction towards the brake disk.

Moreover, in proximity to said upper part 112 and lower part 114 of the reaction shoulders 26, there are flats 115 onto which open further anchorage holes 94.

A latten 154 advantageously is of a shape and dimensions such as to allow it to be mounted on said reaction shoulders 26.

In particular, said latten 154 has a convenient plane of symmetry B-B with respect to which it is possible to distinguish two branches 116, each of which terminates in ends with fixing systems which, according to one possible embodiment, provide portions suitable for producing a form-fit coupling and furthermore couplings with threaded connections.

In particular, at the two ends there are advantageously provided two lugs 120, for example bent at 90 degrees, which each provide a clamping hole 109.

The two branches 116 are connected to each other by a bridge 128 which terminates with a plate 132 having a clamping hole 109.

Advantageously, said clamping hole 109 may be slot-like or have an open end, or forked end, to allow the possibility of varying the position of the clamping of the latten 154 on the reaction shoulders 26.

Said clamping holes 109 are conveniently positioned on the latten in such a way that, after having hooked the lugs 120 on the respective flats 115 of the upper part 112 of the reaction shoulders 26, thus producing a further form-fit coupling, the axes of the anchorage holes of the reaction shoulders 26 are aligned with the axes of the clamping holes of the lattens 154, so as to be able to complete the mounting of the latten 154 on the reaction shoulders 26 with the aforesaid threaded connections.

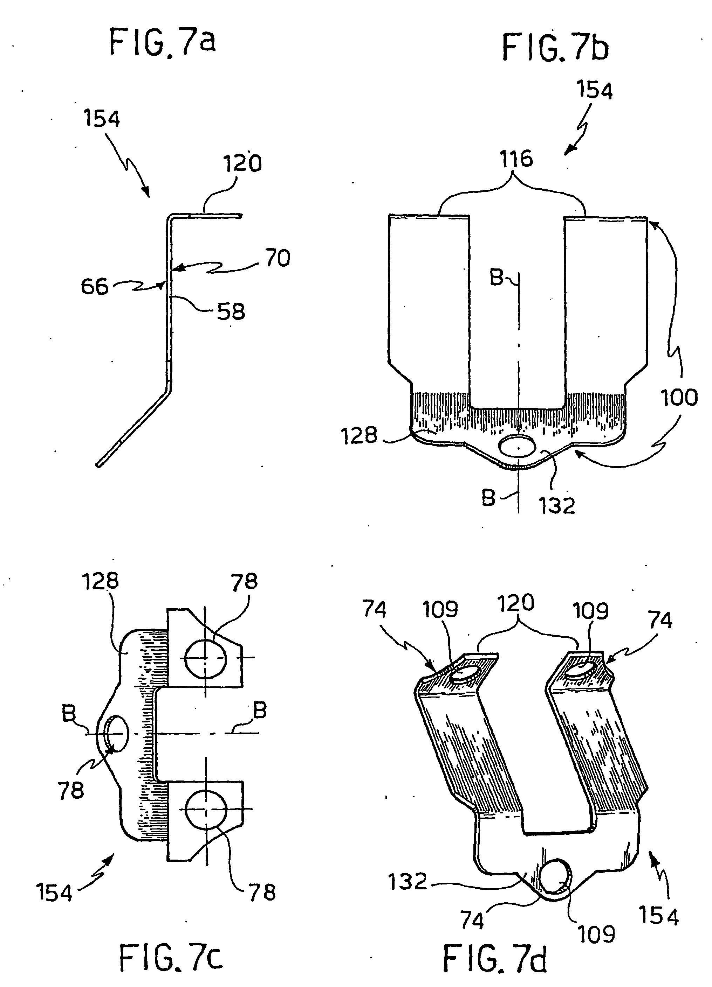

It may be noted that the latten described comprises extensions angled to one another, visible as different angled segments in a lateral view of said latten (Fig. 7A).

Moreover, said latten is suitable for being mounted straddling the brake disk on the caliper body or half-bodies, co-operating in abutment with lateral edges of pads disposed on opposite sides with respect to the brake disk, and constituting an abutment surface for each of said lateral edges.

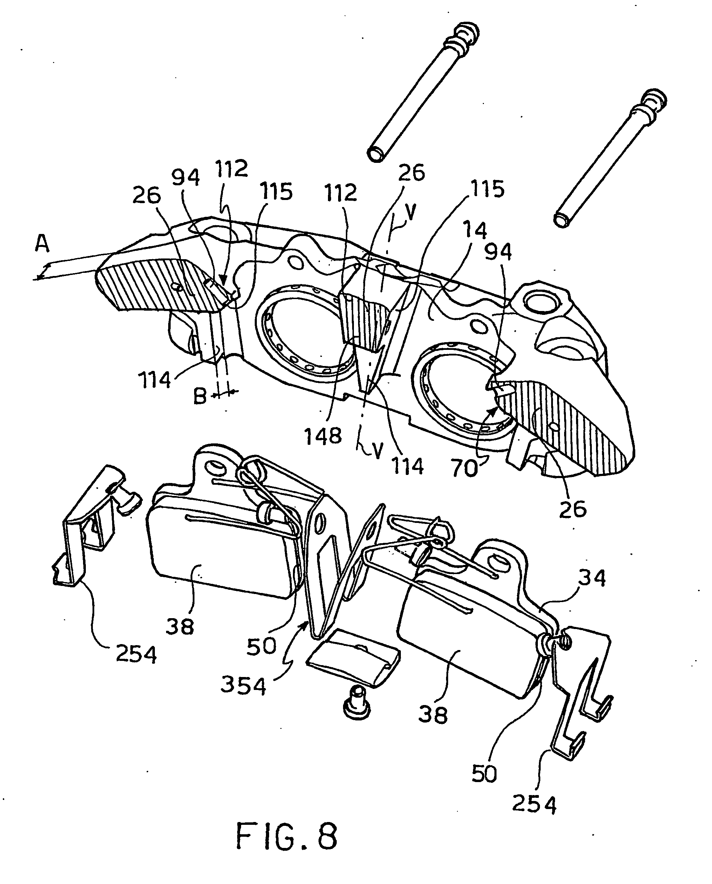

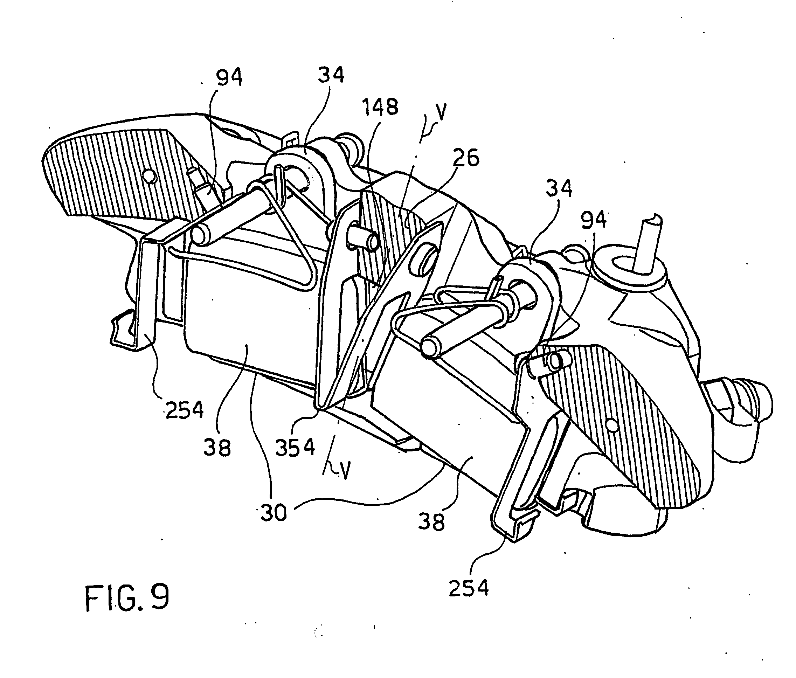

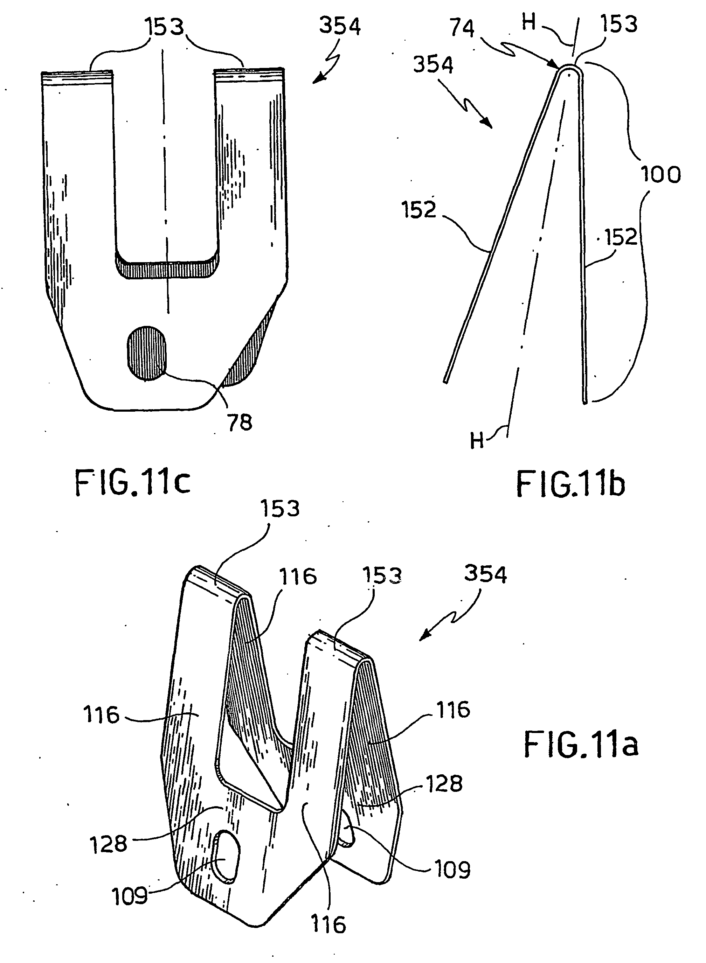

In a further embodiment illustrated in Figures 8 to 11, at the upper part 112, the reaction shoulders 26 of each caliper half-body project for a length "A" at two opposed sides 22 of said caliper half-body, from the base surface 14 towards the brake disk, or in a direction perpendicular to said base surface 14.

At the lower part 114, directed radially towards the periphery of the brake disk, the reaction shoulders 26 project, from the base surface 14 towards the brake disk, for a length "B" less than said length "A".

In proximity to the upper part 112, the reaction shoulders 26 have an advantageously arcuate, sawtooth-shaped or wedge-shaped profile.

In proximity to the lower part 114 of the reaction shoulders 26, there is a flat 115 onto which opens at least one anchorage hole 94.

A latten 254 advantageously is of such a shape and dimensions as to allow it to be mounted on said reaction shoulders 26.

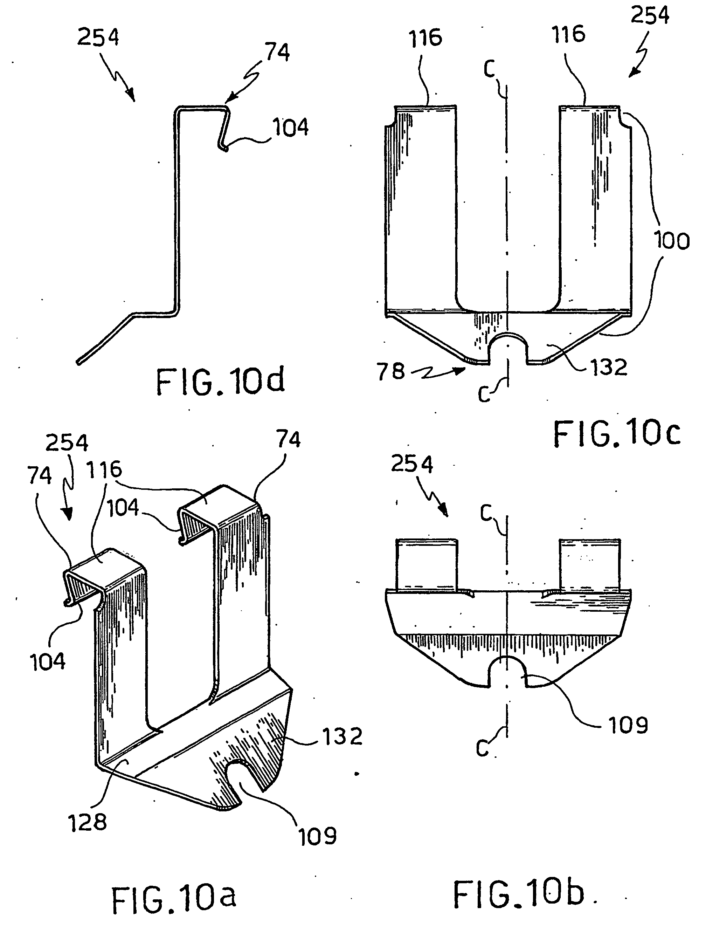

In particular, as can be observed from Figures 10A to 10D, said latten 254 has a plane of symmetry C-C with respect to which it is possible to distinguish two branches 116, each of which terminates in ends having a portion suitable for producing a form-fit coupling 74.

In detail, said portions suitable for producing a form-fit coupling 74 comprise tabs 104 which advantageously have a shape complementary to the profile of the lower part 114 of the reaction shoulders 26, or have a fitting shape with respect to said reaction shoulders 26.

In this way, said tabs 104 produce a hook-like form-fit coupling with said reaction shoulders 26.

The two branches 116 are connected to each other by a bridge 128 which terminates with a plate 132 having a clamping hole 109.

Advantageously, said clamping hole 109 may be slot-like, or have an open end or forked end, to allow the possibility of varying the position of the clamping of the latten 254 on the reaction shoulders 26.

Said clamping hole 109 is conveniently positioned on the latten 254 in such a way that, after having hooked each tab 104 onto the respective lower part 114 of the reaction shoulders 26, the axis of the anchorage hole 94 on the upper part 112 of the reaction shoulders is aligned with the axis of said clamping hole 109.

In this way it is possible to complete the mounting of the latten 254 on the reaction shoulders 26 with the aforesaid threaded connections.

In a further embodiment, illustrated in Figures 8, 9 and 11, there are advantageously provided, for each caliper half-body, reaction shoulders 26 positioned in a central region 148 of the housing space 18.

In particular, said reaction shoulders 26 project from the base surface 14 towards the brake disk, in a generally triangular, or wedge-like or "V"-shape, preferably having a plane of symmetry V-V, perpendicular to said base surface 14.

In this way, disposed centrally in the housing space 18, there can be distinguished, for each caliper half-body 6A, 6B, two reaction shoulders 26, on opposite sides with respect to said plane of symmetry V-V.

Said reaction shoulders 26 disposed centrally in the housing space 18 have, for example at the lower part 114, a generally rounded shape, with an arc which widens towards the upper part 112, or vice versa.

At an opposite end from that rounded in an arc, there are at least two further anchorage holes 94, which extend on opposite sides and perpendicularly to flats 115 of said reaction shoulders.

A latten 354 advantageously is of such a shape and dimensions as to allow it to be mounted on said reaction shoulders 26.

In fact, said latten 354 conveniently has a plane of symmetry H-H, suitable for being arranged substantially radially with respect to the brake disk and perpendicular to a base surface of the caliper body or half-body, and said plane of symmetry H-H distinguishes two opposed half-lattens 152.

Said opposed half-lattens are suitable for co-operating with pads disposed on opposite sides with respect to said plane of symmetry.

Each of said opposed half-lattens comprises two branches 116 connected to each other by a bridge 128 comprising a further clamping hole 109, positioned in such a way that by mounting the latten 354 on the reaction shoulders 26, said clamping hole 109 is aligned with at least one anchorage hole 94 of the reaction shoulders 26.

The two opposed half-lattens 152 are further connected to each other by a hooking portion 153, advantageously of rounded or arcuate shape, such as to be able to hook on and couple in abutment with the lower rounded part 114 of the reaction shoulders 26.

In this way a form-fit coupling connection is produced between the latten and the reaction shoulders.

The mounting of said embodiment of lattens therefore provides for the step of hooking the lattens 354 in abutment on the reaction shoulders, according to the form-fit coupling produced between the hooking portion 153 and the lower rounded part 114 of the reaction shoulders 26, and the step of clamping the latten 354 by means of threaded connections described previously, passing through the aforesaid anchorage and clamping holes.

In this embodiment also, it is of advantage that the clamping holes for clamping the lattens are slot-like or have an open end, so as to be able to vary according to requirements the mounting position of the lattens on the reaction shoulders.

It will be noted that this embodiment is particularly advantageous in the case of the use of two pairs of pads side by side for each side of the braking band. In such a case, in fact, the central bearing member with "V"-shaped profile provides advantageous central abutment surfaces for all 4 pads of the caliper, in as much as each half-latten is suitable for receiving in abutment the lateral edges of pads disposed on opposite sides with respect to the brake disk.

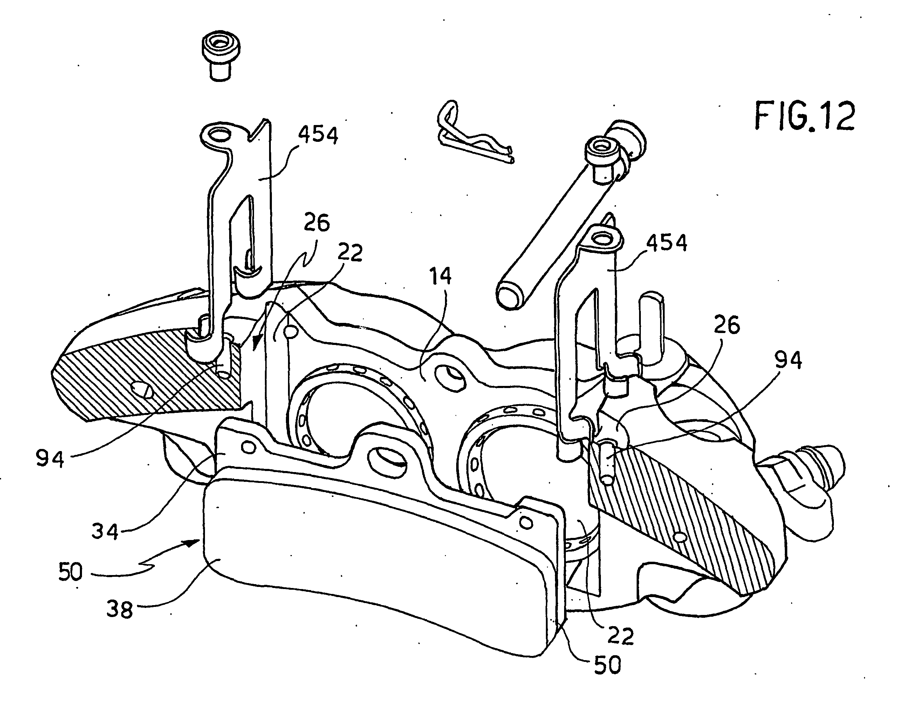

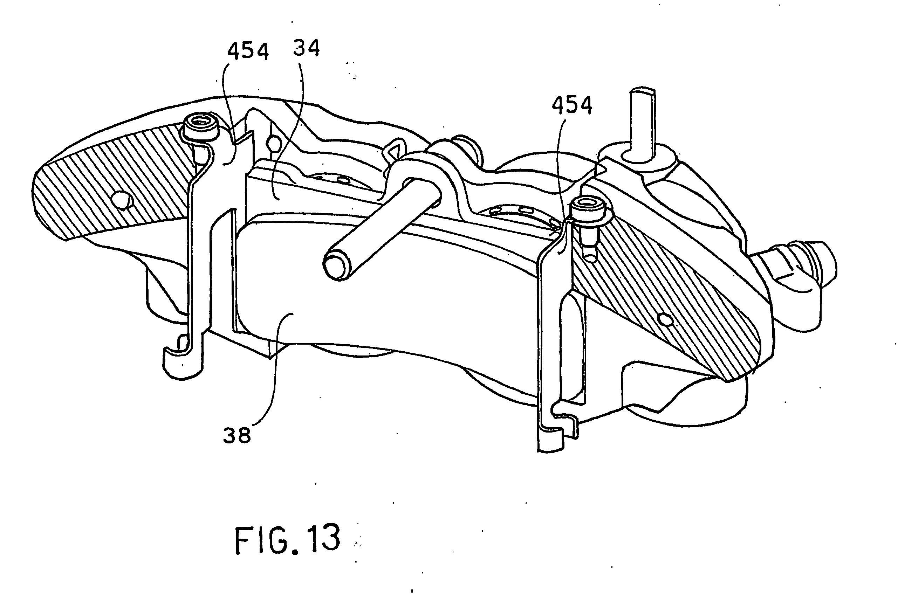

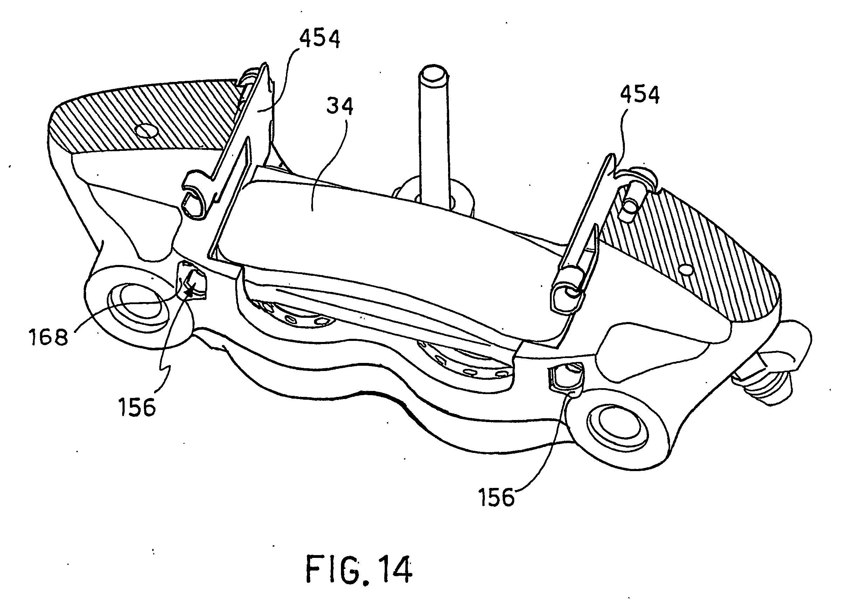

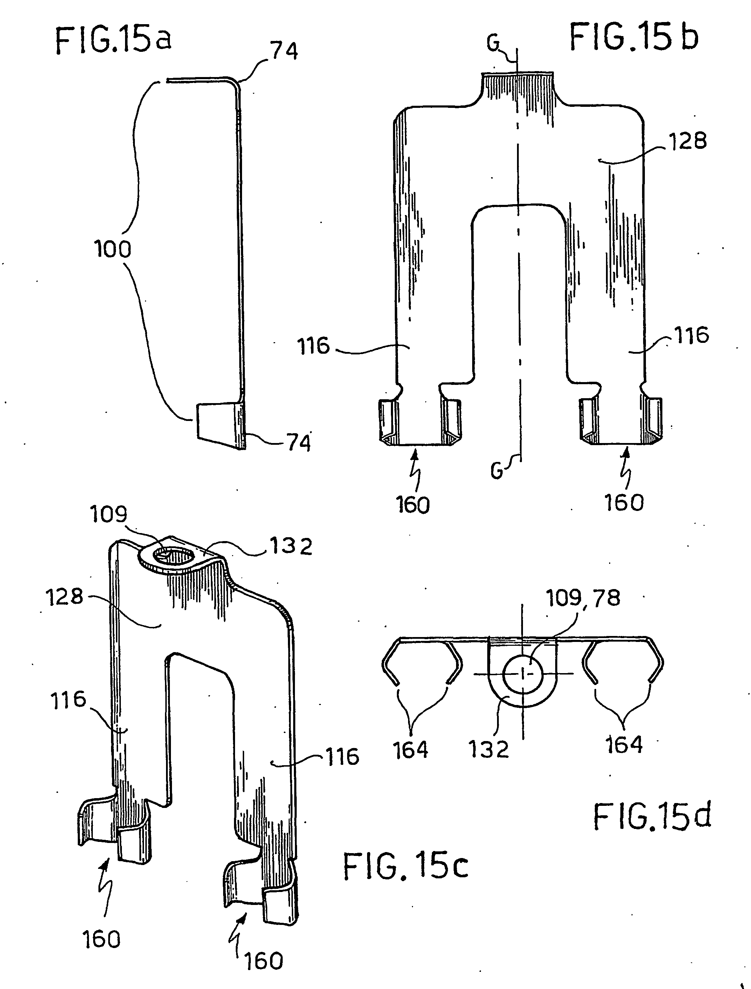

According to a further embodiment, illustrated in Figures 12 to 15, the reaction shoulders 26 project, on opposite sides 22 of the housing space 18, perpendicularly to the base surface 14 towards the brake disk.

They also have at the upper part 112 of the reaction shoulders 26 a flat 115 with a corresponding anchorage hole 94.

In addition they have, at the lower part 114, a pocket 156 which in one embodiment extends approximately in a radial direction with respect to the brake disk.

Each pocket 156 conveniently provides a housing seat, generally of cylindrical geometry.

A latten 454 advantageously is of such a shape and dimensions as to allow it to be mounted on said reaction shoulders 26.

Said latten 454. has a plane of symmetry G-G with respect to which there can be distinguished two opposed branches 116.

Said branches 116 are connected by a bridge 128 which terminates with a plate 132, having a clamping hole 109 for the latten.

Said branches, at an opposite end from said bridge 128, comprise a portion suitable for producing a form-fit coupling 74, and particularly suitable for producing a coupling with interference.

In one advantageous embodiment, said form-fit coupling connection is provided by means of a hook 160.

Preferably, each hook 160 has a "C"-shaped profile with two end lugs 164 separated from each other and bent so as to produce a "C"-shape which maintains a certain elasticity, or which allows said end lugs 164 to flex resiliently.

Said end lugs 164 may conveniently be inserted into the pockets 156, so that they produce a forced connection or a connection by interference.

It is possible, for example, to produce the hook 160 in such a way that in a rest state, or without having mounted the latten, the external overall dimensions of the hook 160 are greater than an inner lateral surface 168 of the pocket 156.

In this way a step in the mounting of the latten on the reaction shoulders is carried out, or by resiliently flexing the lugs 164 so as to bring them closer to each other and thus reduce the external overall dimensions of the hook to allow its insertion into the pocket 156.

Then, after having hooked the branches 116 onto the pockets 156, the mounting of the latten 454 is concluded by fixing with threaded connections passing through the aforesaid anchorage and clamping holes.

It is conveniently possible to provide on the branches 116 alternative geometrical shapes of hooks 160, which nonetheless produce a forced coupling with the respective pockets 156.

It is likewise possible to provide said ends with expansible resilient pins which produce a form-fit coupling with interference, bearing with pressure on the inner lateral surface 168 of the pockets 156.

As may be appreciated from what has been described, the latten according to the invention makes it possible to remedy the drawbacks exhibited by the lattens of the prior art.

Advantageously, the lattens described are provided with connection systems at ends spaced from each other or also opposed to each other.

These systems conveniently comprise portions suitable for producing form-fit couplings with suitable complementary surfaces of the reaction shoulders of the caliper body or of the caliper half-bodies and systems for connection by means of threaded connections.

Owing to these fixing systems, the latten described above requires simple and rapid mounting and, at the same time, guarantees secure clamping devoid of vibrations or wobbling.

The presence of form-fit couplings which are coupled to corresponding complementary surfaces makes it possible to hook the latten rapidly into its seat and then fix it in a stable and secure manner by means of the threaded connections.

Moreover, the form-fit couplings are easily accessible and convenient to hook on, in particular in the case of calipers, either in two parts or of the one-piece type, of reduced dimensions, wherein all the points of connection in the calipers of the prior art are complex of access both in the step of machining of the seats and in the subsequent step of assembly.

The presence of constraints on opposed ends guarantees that in its operation the latten avoids flexing and wobbling, phenomena which would generate vibration and noise.

In order further to reduce vibration in the phase of contact between the pads and the lattens, it is further possible to preload the lattens at the form-fit couplings, simply by assigning a geometry to said couplings such as to guarantee that the abutment body of the latten is, over its whole length, in abutment with the corresponding reaction shoulders solely as a result of the tightening of the threaded connections.

In this way the preloading assigned contributes to the damping of vibrations in the calipers.

It is likewise possible to guarantee that the entire bearing surface of the latten, over its whole length, is in abutment against the reaction shoulders.

In this way it is further ensured that the latten, bearing completely on the reaction shoulders, avoids flexing and wobbling.

The present invention further allows the mounting of lattens for reaction shoulders also in calipers of reduced dimensions, both of the one-piece type and of the two-part type, wherein the surfaces of the shoulders are particularly restricted, are difficult of access and the mounting of the lattens according to the prior art would be, even where possible, extremely complex and precarious, since it would not however guarantee secure clamping devoid of vibration.

Moreover, the present invention, by guaranteeing the mounting of reaction lattens also in calipers of reduced dimensions, either in two parts or of the one-piece type, makes it possible to produce such calipers in materials having a low specific weight, such as, for example, light alloys which, without the use of said lattens, would be damaged by contact with the edges of the plates of the pads.

The need for reduction of the unsuspended masses is felt particularly in the motorcycle field, where lightening of the front calipers due to the use of ultra-light alloys brings a significant reduction in percentage terms of the unsuspended masses at the front end.

In addition, the production of lattens straddling the brake disk which provide the abutments for a pair of two pads simultaneously, further prevents the occurrence of phenomena of wobbling of the plate in the braking phase, since the same plate body is simultaneously stressed by the two pads symmetrically with respect to a plane of symmetry passing through the brake disk.

This straddling solution further reduces significantly the times and difficulty of assembly of such plates, since it makes it possible in a single assembly operation to fix the lattens for a pair of pads.

Moreover, the fixing systems described above make it possible, during the assembly phase, to preload the lattens in such a way as to guarantee further damping of the vibrations due to contact with the pads and therefore to avoid wobbling.

In fact, the form-fit couplings are provided with a certain increased flexibility owing to the presence of fillets or undercuts in the areas of connection between the hooking systems for form-fit coupling and the bodies of the lattens.

Moreover, the threaded connection systems provide for the possibility of varying the clamping position of the latten, by providing either slot-like holes or holes having an open end. In this way, by calibrating in the assembly stage the clamping position of the latten, its preloading is also modified.

Obviously, an expert in the field, for the purpose of fulfilling contingent and specific requirements, may apply numerous modifications and variants to the lattens described above, all however contained within the scope of the invention as defined by the following claims.

## Claims

1. A caliper latten (54, 154, 254, 354, 454) for disk brakes, which is suitable for being mounted within a caliper body (6) or half-body (6A, 6B) of a disk brake caliper (2), and interposed between a lateral edge (50) of a pad (30) and reaction shoulders (26) of said body or half-body, said latten further comprising fixing systems for fixing said latten to said caliper body (6) or half-body (6A, 6B), said fixing systems comprising at least one coupling for threaded connection (78), **characterised in that** said fixing system further comprises at least one portion of said latten suitable for producing form-fit coupling (74) with a corresponding portion of the caliper body or half-body said at least one portion suitable for producing a form-fit coupling (74) and said at least one coupling for threaded connection (78) being located in anchorage ends (100), spaced from each other, of said latten.

2. A latten according to claim 1, wherein said fixing systems are provided at opposed anchorage ends (100) of said latten.

3. A latten according to any one of the preceding claims, wherein said latten comprises a bearing surface (70) which is in abutment over its whole length against said reaction shoulders (26).

4. A latten according to any one of the preceding claims, wherein an abutment body (58) of said latten cooperates in abutment with the lateral edge (50) of a single pad (30) for disk brakes.

5. A latten according to claim 4, wherein said abutment body (58) is substantially flat, and extends in a prevailing direction (X-X), said anchorage ends (100) being respectively disposed along sides of said abutment body (58) which are opposed with respect to said prevailing direction (X-X).

6. A latten according to claim 5, wherein said at least one portion suitable for producing a form-fit coupling (74) comprises at least one tab (104), said at least one coupling for threaded connection (78) comprises at least one terminal piece (108), said tab (104) and said terminal piece (108) being bent on the same side of said abutment body (58).

7. A latten according to any one of claims 1 to 3, wherein, with respect to a direction perpendicular to a thickness of said latten, the latten comprises at least two extensions angled to each other.

8. A latten according to any one of claims 1, 2, 3 and 7, comprising at least one extension having a configuration of a fitting shape with respect to said reaction shoulders (26).

9. A latten according to any one of claims 1 to 3 and 7 to 8, wherein said latten is suitable for being mounted straddling the brake disk on the caliper body or half-bodies (6A, 6B), and to co-operate in abutment with lateral edges (50) of a pair of pads (30) disposed on opposite sides with respect to the brake disk.

10. A latten according to claims 1 to 3 and 7 to 9, wherein said latten has a plane of symmetry.

11. A latten according to any one of claims 7 to 10, comprising an abutment body (58) provided with two branches (116) suitable for being disposed straddling said brake disk and connected by a bridge (128), each of said branches (116) facing a lateral edge (50) of a pad (30) for disk brakes and constituting an abutment surface (66) for said lateral edge (50).

12. A latten according to claim 11, wherein said bridge (128) comprises a coupling for threaded connection (78) and the ends of said branches (116) comprise said portion suitable for producing a form-fit coupling (74).

13. A latten according to claim 11, wherein said bridge (128) comprises a coupling for threaded connection (78) and the ends of said branches (116) comprise a coupling for threaded connection (78).

14. A latten according to any one of the preceding claims, wherein said portion suitable for producing at least one form-fit coupling connection (74) is suitable for producing a coupling with interference.

15. A latten according to claim 14, wherein said portion suitable for producing at least one form-fit coupling (74) comprises two lugs (164) bent substantially in a "C"-shape.

16. A latten according to any one of the preceding claims, wherein said latten comprises an abutment body (58) having a plane of symmetry suitable for being disposed substantially radially with respect to the brake disk and perpendicular to a base surface (14) of the caliper body or half-body.

17. A latten according to claim 16, wherein said plane of symmetry distinguishes two opposed half-lattens (152), suitable for co-operating with pads (30) disposed on opposite sides with respect to said plane of symmetry.

18. A latten according to claim 17, wherein each of said opposed half-lattens (152) comprises two branches (116) connected to each other by a bridge (128) and suitable for being mounted straddling the brake disk, and suitable for co-operating with lateral edges (50) of separate pads (30) disposed on opposite sides with respect to the brake disk.

19. A latten according to claim 18, having a "V"-shaped profile.

20. A latten according to any one of the preceding claims, wherein said at least one portion suitable for producing a form-fit coupling (74) comprises fillets or undercuts (110) in proximity to said anchorage ends (100).

21. A latten according to any one of the preceding claims, wherein said at least one portion suitable for producing a form-fit coupling (74) comprises at least one end in the shape of a hook.

22. A latten according to any one of the preceding claims, wherein said at least one coupling for threaded connection (78) comprises fillets or undercuts (110) in proximity to said anchorage ends (100).

23. A latten according to any one of the preceding claims, wherein said at least one coupling for threaded connection (78) comprises at least one slot-like hole.

24. A latten according to any one of the preceding claims, wherein said at least one coupling for threaded connection (78) comprises at least one forked end.

25. A latten according to any one of the preceding claims, made of stainless steel.

26. A latten according to claim 25, wherein the stainless steel is a X5CrNi 1810 UNI EN 10088-2 (AISI 304) steel.

27. A disk brake caliper (2), produced as two half-calipers (6A, 6B) connected to each other, comprising reaction shoulders (26) suitable for co-operating with a latten (54, 154, 254, 354, 454) according to any one of claims 1 to 26.

28. A disk brake caliper (2), produced in a single piece, comprising reaction shoulders (26) suitable for co-operating with a latten (54, 154, 254, 354, 454) according to any one of claims 1 to 26.

29. A disk brake caliper according to claim 27 or 28 made of aluminium alloy.

30. A disk brake caliper (2), comprising at least one latten (154, 254, 354, 454) according to claims 7 to 26, mounted so that said branches (116) extend, starting from said bridge (128), in a direction away from the brake disk and said bridge (128) is turned towards the brake disk.

31. A disk brake caliper, comprising at least one latten (154, 254, 354, 454) according to claims 7 to 26, mounted so that said branches (116) extend, starting from said bridge (128), towards the brake disk and said bridge (128) is turned in a direction away from the brake disk.

32. A disk brake comprising a disk brake caliper according to any one of claims 27 to 31.

33. A disk brake comprising at least one latten (54, 154, 254, 354, 454) according to any one of claims 1 to 26.

## Patentansprüche

1. Bremssattelbeilageblech (54, 154, 254, 354, 454) für Scheibenbremsen, welches zum Anbringen in einem Bremssattelkörper (6) oder -halbkörper (6A, 6B) für einen Scheibenbremssattel (2) ist und zwischen einer seitlichen Kante (50) eines Bremsklotzes (30) und den Reaktionsschultern (26) des Körpers oder Halbkörpers angeordnet ist, wobei das Beilageblech des Weiteren Befestigungssysteme zum Befestigen des Beilageblechs am Bremssattelkörper (6) oder -halbkörper (6A, 6B) umfasst, wobei die Befestigungssysteme wenigstens eine Kupplung für die Schraubverbindung (78) umfassen, **dadurch gekennzeichnet, dass** das Befestigungssystem des Weiteren wenigstens einen Abschnitt des Beilageblechs umfasst, welcher zum Herstellen einer formschlüssigen Kupplung (74) mit einem entsprechenden Abschnitt des Bremssattelkörpers oder -halbkörpers geeignet ist, wobei der wenigstens eine Abschnitt, welcher zum Herstellen einer formschlüssigen Kupplung (74) geeignet ist, und die wenigstens eine Kupplung für eine Schraubverbindung (78) in Verankerungsenden (100), welche von einander beabstandet sind, des Beilageblechs angeordnet sind.

2. Beilageblech gemäß Anspruch 1, wobei die Befestigungssysteme an gegenüberliegenden Verankerungsenden (100) des Beilageblechs vorgesehen sind.

3. Beilageblech gemäß einem der vorangehenden Ansprüche, wobei das Beilageblech eine Lageroberfläche (70) umfasst, welche über ihre gesamte Länge gegen die Reaktionsschulter (26) stößt.

4. Beilageblech gemäß einem der vorangehenden Ansprüche, wobei ein Widerlagerkörper (58) des Beilageblechs mit einer seitlichen Kante (50) eines einzelnen Bremsklotzes (30) für Scheibenbremsen anstoßend zusammenwirkt.

5. Beilageblech gemäß Anspruch 4, wobei der Widerlagerkörper (58) im Wesentlichen flach ist und sich in eine vorherrschende Richtung (X-X) erstreckt, wobei die Verankerungsenden (100) jeweils entlang von Seiten des Widerlagerkörpers (58) angeordnet sind, welche in Bezug auf die vorherrschende Richtung (X-X) einander gegenüber liegen.

6. Beilageblech gemäß Anspruch 5, wobei der wenigstens eine Abschnitt, welcher für die Herstellung einer formschlüssigen Kupplung (74) geeignet ist, wenigstens einen Dorn (104) umfasst, wobei die eine Kupplung für die Schraubverbindung (78) wenigstens ein Endstück (108) umfasst, wobei der Dorn (104) und das Endstück (108) auf dieselbe Seite des Widerlager körpers (58) gebogen sind.

7. Beilageblech gemäß einem der Ansprüche 1 bis 3, wobei in Bezug auf eine Richtung senkrecht zu einer Dicke des Beilageblechs das Beilageblech wenigstens zwei Verlängerungen umfasst, die miteinander einen Winkel einschließen.

8. Beilageblech gemäß einem der Ansprüche 1, 2, 3 und 7, umfassend wenigstens eine Verlängerung, welche eine Konfiguration einer passenden Form in Bezug auf die Reaktionsschulter (26) aufweist.

9. Beilageblech gemäß einem der Ansprüche 1 bis 3 und 7 bis 8, wobei das Beilageblech geeignet ist um in reitender Überdeckung der Bremsscheibe auf dem Bremssattelkörper oder den Bremssattelhalbkörpern (6A, 6B) angebracht zu werden und um anstoßend mit den seitlichen Rändern (50) eines Paares von Bremsklötzen (30), welche an gegenüberliegenden Seiten in Bezug auf die Bremsscheibe angeordnet sind, zusammenzuarbeiten.

10. Beilageblech gemäß einem der Ansprüche 1 bis 3 und 7 bis 9, wobei das Beilageblech eine Symmetrieebene aufweist.

11. Beilageblech gemäß einem der Ansprüche 7 bis 10, umfassend einen Widerlagerkörper (58), welcher mit zwei Schenkeln (116) ausgestattet ist, welche geeignet sind, um reitend bei der Bremsscheibe angeordnet und durch eine Brücke (128) verbunden zu werden, wobei jeder der Schenkel (116) einem seitlichen Rand (50) eines Bremsklotzes (30) für Scheibenbremsen zugewandt ist und eine Anstoßoberfläche (66) für den seitlichen Rand (50) bildet.

12. Beilageblech gemäß Anspruch 11, wobei die Brücke (128) eine Kupplung für eine Schraubverbindung (78) umfasst und die Enden der Schenkel (116) den Abschnitt umfassen, welcher zum Herstellen einer formschlüssigen Kupplung (74) geeignet ist.

13. Beilageblech gemäß Anspruch 11, wobei die Brücke (128) eine Kupplung für eine Schraubverbindung (78) umfasst und die Enden der Schenkel (116) eine Kupplung für eine Schraubverbindung (78) umfassen.

14. Beilageblech gemäß einem der vorangehenden Ansprüche, wobei der Abschnitt, welcher zum Herstellen wenigstens einer formschlüssigen Kupplungsverbindung (74) geeignet ist, zum Herstellen einer Kupplung mit Verschleißeingriff geeignet ist.

15. Beilageblech gemäß Anspruch 14, wobei der Abschnitt, welcher zum Herstellen wenigstens einer formschlüssigen Kupplung (74) geeignet ist, zwei Ansätze (164) umfasst, welche im Wesentlichen in einer "C"-Form gebogen sind.

16. Beilageblech gemäß einem der vorangehenden Ansprüche, wobei das Beilageblech einen Widerlagerkörper (58) umfasst, welcher eine Symmetrieebene aufweist, die geeignet ist, um im Wesentlichen radial in Bezug auf die Bremsscheibe und senkrecht zu einer Basisoberfläche (14) des Bremssattelkörpers oder -halbkörpers angeordnet zu sein.

17. Beilageblech gemäß Anspruch 16, wobei die Symmetrieebene zwei gegenüberliegende Halbbeilagebleche (152) unterscheidet, welche geeignet für das Zusammenwirken mit Bremsklötzen (30) sind, die auf gegenüberliegenden Seiten in Bezug auf die Symmetrieebene angeordnet sind.

18. Beilageblech gemäß Anspruch 17, wobei jedes der gegenüberliegenden Halbbeilagebleche (152) zwei Schenkel (116) umfasst, die miteinander durch eine Brücke (128) verbunden sind und die geeignet sind, um die Bremsscheibe reitend angebracht zu werden, und geeignet sind, um mit seitlichen Rändern (50) der getrennten Bremsklötze (30) zusammenzuwirken, welche auf gegenüberliegenden Seiten in Bezugs auf die Bremsscheibe angeordnet sind.

19. Beilageblech gemäß Anspruch 18, welches ein "V"-förmiges Profil aufweist.

20. Beilageblech gemäß einem der vorangehenden Ansprüche, wobei der wenigstens eine Abschnitt, welcher zum Herstellen einer formschlüssigen Kupplung (74) geeignet ist, Hohlkehlen oder Unterschnitte (110) nahe der Verankerungsenden (100) umfasst.

21. Beilageblech gemäß einem der vorangehenden Ansprüche, wobei der wenigstens eine Abschnitt, welcher zum Herstellen einer formschlüssigen Kupplung (74) geeignet ist, wenigstens ein Ende in der Form eines Hakens umfasst.

22. Beilageblech gemäß einem der vorangehenden Ansprüche, wobei die wenigstens eine Kupplung für eine Schraubverbindung (78) Hohlkehlen oder Unterschnitte (110) nahe den Verankerungsenden (100) umfasst.

23. Beilageblech gemäß einem der vorangehenden Ansprüche, wobei die wenigstens eine Kupplung für eine Schraubverbindung (78) wenigstens ein schlitzartiges Loch umfasst.

24. Beilageblech gemäß einem der vorangehenden Ansprüche, wobei die wenigstens eine Kupplung für eine Schraubverbindung (78) wenigstens ein gegabeltes Ende umfasst.

25. Beilageblech gemäß einem der vorangehenden Ansprüche, hergestellt aus rostfreiem Stahl.

26. Beilageblech gemäß Anspruch 25, wobei der rostfreie Stahl ein X5CrNi 1810 UNI EN 10088-2 (AISI 304) Stahl ist.

27. Scheibenbremssattel (2), hergestellt als zwei Halbbremssattel (6A, 6B), die miteinander verbunden sind, umfassend Reaktionsschultern (26), die geeignet sind, um mit einem Beilageblech (54, 154, 254, 354, 454) gemäß einem der Ansprüche 1 bis 26 zusammenzuwirken.

28. Scheibenbremssattel (2), hergestellt in einem Stück, umfassend Reaktionsschultern (26), die geeignet sind, um mit einem Beilageblech (54, 154, 254, 354, 454) gemäß einem der Ansprüche 1 bis 26 zusammenzuwirken.

29. Scheibenbremssattel gemäß einem der Ansprüche 27 oder 28, hergestellt aus einer Aluminiumlegierung.

30. Scheibenbremssattel (2), umfassend wenigstens ein Beilageblech (154, 254, 354, 454) gemäß einem der Ansprüche 7 bis 26, welches so angebracht ist, dass sich die Schenkel (116) beginnend von der Brücke (128) in eine Richtung weg von der Bremsscheibe erstrecken und die Brücke (128) in eine Richtung hin zu der Bremsscheibe gedreht ist.

31. Scheibenbremssattel (2), umfassend wenigstens ein Beilageblech (154, 254, 354, 454) gemäß einem der Ansprüche 7 bis 26, welches so angebracht ist, dass sich die Schenkel (116) beginnend von der Brücke (128) in eine Richtung hin zu der Bremsscheibe erstrecken und die Brücke (128) in eine Richtung weg von der Bremsscheibe gedreht ist.

32. Scheibenbremse, umfassend einen Scheibenbremssattel gemäß einem der Ansprüche 27 bis 31.

33. Scheibenbremse, umfassend wenigstens ein Beilageblech (54, 154, 254, 354, 454) gemäß einem der Ansprüche 1 bis 26.

## Revendications

1. Plaque d'étrier (54, 154, 254, 354, 454) pour des freins à disque, qui convient pour être monté dans un corps (6) ou un demi-corps (6A, 6B) d'un étrier (2) de frein à disque et intercalé entre un bord latéral (50) d'une plaquette (30) et des épaulements de réaction (26) dudit corps ou dudit demi-corps, ladite plaque comprenant en outre des systèmes de fixation pour fixer ladite plaque audit corps (6) de l'étrier ou aux demi-corps (6A, 6B) de l'étrier, lesdits systèmes de fixation comprenant au moins un accouplement pour un raccordement fileté (78), **caractérisé en ce que** ledit système de fixation comporte en outre au moins une partie de ladite plaque convenant pour produire un accouplement (74) à ajustement de formes avec une partie correspondante du corps ou du demi-corps de l'étrier, ladite au moins une partie convenant pour la production d'un accouplement à ajustement de formes (74) et ledit au moins un accouplement pour un raccordement fileté (78) étant situé dans des extrémités d'ancrage (100), distantes l'une de l'autre, de ladite plaque.

2. Plaque selon la revendication 1, dans laquelle lesdits systèmes de fixation sont prévus sur des extrémités d'ancrage opposées (100) de ladite plaque.

3. Plaque selon l'une quelconque des revendications précédentes, dans laquelle ladite plaque comprend une surface de support (70), qui est en aboutement, sur toute sa longueur, contre lesdits épaulements de réaction (26).

4. Plaque selon l'une quelconque des revendications précédentes, dans laquelle un corps d'aboutement (58) de ladite plaque coopère en aboutement avec le bord latéral (50) d'une seule plaquette (30) pour des freins à disque.

5. Plaque selon la revendication 4, dans laquelle ledit corps d'aboutement (58) est essentiellement plat et s'étend dans une direction prépondérante (X-X), lesdites extrémités d'ancrage (100) étant disposées respectivement le long de côtés dudit corps d'aboutement (58), qui sont opposés selon la direction prépondérante (X-X).

6. Plaque selon la revendication 5, dans laquelle ladite au moins une partie convenant pour la production d'un accouplement à ajustement de formes (74) comprend au moins une patte (104), ledit au moins un accouplement pour un raccordement fileté (78) comprend au moins une pièce terminale (108), ladite patte (104) et ladite pièce terminale (108) étant repliées du même côté dudit corps d'aboutement (58).

7. Plaque selon l'une quelconque des revendications 1 à 3, dans laquelle, par rapport à une direction perpendiculaire à une épaisseur de ladite plaque, la plaque comprend au moins deux prolongements faisant un angle entre eux.

8. Plaque selon l'une quelconque des revendications 1, 2, 3 et 7, comprenant au moins un prolongement possédant une configuration d'une forme d'ajustement par rapport auxdits épaulements de réaction (26).

9. Plaque selon l'une quelconque des revendications 1 à 3 et 7 à 8, dans laquelle ladite plaque convient pour être montée en chevauchement sur le disque de frein sur le corps ou les demi-corps (6A, 6B) de l'étrier et pour coopérer en aboutement avec des bords latéraux (50) d'une paire de plaquettes (30) disposées sur des côtés opposés par rapport au disque de frein.

10. Plaque selon les revendications 1 à 3 et 7 à 9, dans laquelle ladite plaque possède un plan de symétrie.

11. Plaque selon l'une quelconque des revendications 7 à 10, comprenant un corps d'aboutement (58) pourvu de deux branches (116) convenant pour être disposées de manière à chevaucher ledit disque de frein et raccordées par un pont (128), chacune desdites branches (116) faisant face à un bord latéral (50) d'une plaquette (30) pour des disques de frein et constituant une surface d'aboutement (66) pour ledit bord latéral (50).

12. Plaque selon la revendication 11, dans laquelle ledit pont (128) comprend un accouplement pour un raccordement fileté (78), et les extrémités desdites branches (116) comprennent ladite partie convenant pour produire un accouplement à ajustement de formes (74).

13. Plaque selon la revendication 11, dans laquelle ledit pont (128) comprend un accouplement pour un raccordement fileté (78), et les extrémités desdites branches (116) comprennent un accouplement pour un raccordement fileté (78).

14. Plaque selon l'une quelconque des revendications précédentes, dans laquelle ladite partie convenant pour la production d'au moins une connexion d'accouplement à ajustement de formes (74) est appropriée pour produire un accouplement avec ajustement serré.

15. Plaque selon la revendication 14, dans laquelle ladite partie convenant pour la production d'au moins un accouplement à ajustement de formes (74) comprend deux pattes (164) repliées sensiblement sous la forme d'un "C".

16. Plaque selon l'une quelconque des revendications précédentes, dans laquelle ladite plaque comprend un corps d'aboutement (58) possédant un plan de symétrie approprié pour être disposé sensiblement radialement par rapport au disque de frein et perpendiculairement à une surface de base (14) du corps ou du demi-corps d'étrier.

17. Plaque selon la revendication 16, dans laquelle ledit plan de symétrie sépare deux demi-plaques opposées (152), convenant pour coopérer avec des plaquettes (30) disposées sur des côtés opposés par rapport audit plan de symétrie.

18. Plaque selon la revendication 17, dans laquelle chacune desdites demi-plaques opposées (152) comprend deux branches (116) raccordées l'une à l'autre par un pont (128) et convenant pour être montées en chevauchement sur le disque de frein et convenant pour coopérer avec des bords latéraux (50) des plaquettes séparées (30) disposées sur des côtés opposés par rapport au disque de frein.

19. Plaque selon la revendication 18, comportant un profil en forme de "V".

20. Plaque selon l'une quelconque des revendications précédentes, dans laquelle au moins une partie convenant pour la formation d'un accouplement à ajustement de formes (74) comprend des congés ou encoches (110) à proximité desdites extrémités d'ancrage (100).

21. Plaque selon l'une quelconque des revendications précédentes, dans laquelle ladite au moins une partie convenant pour produire un accouplement à ajustement de formes (74) comprend au moins une extrémité en forme de crochet.

22. Plaque selon l'une quelconque des revendications précédentes, dans laquelle ledit au moins un accouplement pour un raccordement fileté (78) comprend des congés ou encoches (110) à proximité desdites extrémités d'ancrage (100).

23. Plaque selon l'une quelconque des revendications précédentes, dans laquelle ledit au moins un accouplement pour un raccordement fileté (78) comprend au moins un trou en forme de fente.

24. Plaque selon l'une quelconque des revendications précédentes, dans laquelle ledit au moins un accouplement pour un raccordement fileté (78) comprend au moins une extrémité fourchue.

25. Plaque selon l'une quelconque des revendications précédentes, formée d'acier inoxydable.

26. Plaque selon la revendication 25, dans laquelle l'acier inoxydable est l'acier X5CrNi 1810 UNI EN 10088-2 (AISI 304).

27. Etrier (2) de frein à disque, produit sous la forme de deux demi-étriers (6A, 6B) reliés entre eux et comprenant des épaulements de réaction (26) convenant pour coopérer avec une plaque (54, 154, 254, 354, 454) selon l'une quelconque des revendications 1 à 26.

28. Etrier (2) de frein à disque, fabriqué en une seule pièce, comprenant des épaulements de réaction (26) convenant pour coopérer avec une plaque (54, 154, 254, 354, 454) selon l'une quelconque des revendications 1 à 26.

29. Etrier de frein à disque selon la revendication 27 ou 28, formé en alliage d'aluminium.

30. Etrier (2) de frein à disque, comprenant au moins une plaque (154, 254, 354, 454) selon les revendications 7 à 26, montée de telle sorte que lesdites branches (116) s'étendent, en partant dudit pont (128), dans une direction s'écartant dudit disque de frein, et ledit pont (128) est coudé en direction du disque de frein.

31. Etrier de frein à disque, comprenant au moins une plaque (154, 254, 354, 454) selon les revendications 7 à 26, montée de telle sorte que lesdites branches (116) s'étendent, en partant dudit pont (128), en direction du disque de frein, et que ledit pont (128) est tourné dans une direction s'écartant du disque de frein.

32. Disque de frein comprenant un étrier de disque de frein selon l'une quelconque des revendications 27 à 31.

33. Disque de frein comprenant au moins une plaque (54, 154, 254, 354, 454) selon l'une quelconque des revendications 1 à 26.
